# EUROPÄISCHE PATENTSCHRIFT

(11) **EP 0 963 020 B1**
(45) Veröffentlichungstag und Bekanntmachung des Hinweises auf die Patenterteilung: **01.08.2001**
(21) Anmeldenummer: 99106607.7
(22) Anmeldetag: 31.03.1999
(51) Int. Cl.: H02G 3/06, H01R 9/05

(54) **Halterung für längliche Körper mit elektrischer Abschirmung**
Holding device for elongate body with electrical screening
Dispositif d'attache pour un corps allongé à blindage électrique

(30) Priorität: 03.06.1998 DE 19824808
(43) Veröffentlichungstag der Anmeldung: 08.12.1999
(73) Patentinhaber: Anton Hummel Verwaltungs-GmbH, D-79183 Waldkirch (DE)
(72) Erfinder: Bartholomä, Mario, 79297 Winden (DE); Zügel, Fritz, 79183 Waldkirch (DE); Götz, Volker, 79341 Kenzingen (DE); Adolf, Jürgen, 79211 Denzlingen (DE)
(74) Vertreter: Patent- und Rechtsanwaltssozietät, Maucher, Börjes & Kollegen

(56) Entgegenhaltungen:
- DE-A- 1 765 795
- DE-U- 7 434 418
- US-A- 4 739 126

## Beschreibung

Die Erfindung betrifft eine Halterung für längliche Körper wie Kabel, Schläuche oder dergleichen, die eine elekrische Abschirmung aufweisen und in Gebrauchsstellung - gegebenenfalls nach einem Freilegen der Abschirmung durch Abisolieren - mittels eines Klemmfinger aufweisenden, elektrisch leitenden Teil der Halterung in Form eines Einsatzes in elektrischer Verbindung mit der Halterung sind, wobei die Halterung eine Aufnahmeöffnung zum Ein- oder Durchführen des länglichen Körpers und zur Aufnahme des elektrisch leitenden Einsatzes und dieser Einsatz einen Haltering mit in etwa axialer Richtung davon abstehenden Klemmfingern aufweist.

Eine derartige Anordnung bzw. Halterung ist aus der DE-OS 17 65 795 bekannt. Die Klemmfinger des Feder-Einsatzes werden bei dieser bekannten Lösung durch einen konischen Bereich einer Haltehülse und eine Axialbewegung radial nach innen gegen die Abschirmung verformt. Die Güte des Kontaktes und die Andruckkraft des jeweiligen Klemmfingers an der Abschirmung hängt also von der Länge der Axialbewegung und dem Konuswinkel sowie gleichzeitig der Länge der Klemmfinger ab. Wird die für die Axialverstellung in diesem Falle notwendige Verschraubung aus irgendeinem Grunde nicht mit einer genügend großen axialen Verstellbewegung über eine genügend große axiale Länge durchgeführt, ist eine gute Kontaktgabe gefährdet oder fehlt sogar.

Eine ähnlich Anordnung ist aus DE-GM 74 34 418 bekannt. Dabei haben die auf ihrer Innenseite etwa koaxial verlaufenden Klemmfinger eine sich von ihrer Ausgangsstelle zu ihrem freien Ende hin verjüngende konische Form und der gesamte Einsatz muß bei einer Axialverstellung des Kabels und einer es erfassenden Halterung in axialer Richtung in eine Verengung verschoben werden, wodurch wiederum die Klemmfinger aufgrund ihrer konischen Außenform in radialer Richtung gegen die elektrische Abschirmung hin verformt und an dieser angedrückt werden. Somit ist auch in diesem Falle die Güte des Kontaktes von der axialen Verstellung und dem Konuswinkel abhängig, d.h. auch in diesem Falle ist eine relativ große axiale Verstellung erforderlich, um einen ausreichend guten Kontakt herzustellen.

Es besteht deshalb die Aufgabe, eine Halterung der eingangs genannten Art zu schaffen, bei welcher unabhängig von einer Axialbewegung eine sichere Kontaktierung zwischen dem länglichen Körper und seiner Abschirmung und dem die Klemmfinger aufweisenden Einsatz erreicht werden kann, wenn dieser sich in seiner Montagestellung befindet.

Zur Lösung dieser Aufgabe ist vorgesehen, daß an der Außenseite von zur Kontaktierung dienenden Klemmfingern mit Abstand von deren als Kontaktstelle dienenden freien Enden und mit Abstand zu dem Haltering jeweils wenigstens ein Vorsprung angeordnet ist, daß die Vorsprünge der Klemmfinger in entspannter Lage - also wenn sich der Einsatz beispielsweise außerhalb der Aufnahmeöffnung der Halterung befindet - bis zu einem Hüllkreis oder Hüllzylinder reichen, dessen Durchmesser größer als die entsprechende Abmessung des Innenquerschnittes der Aufnahmeöffnung der Halterung ist, und daß die Vorsprünge bei in die Aufnahmeöffnung eingesetztem Einsatz an der Wandung der Aufnahmeöffnung unter der Rückstellkraft der in dieser Gebrauchsstellung radial einwärts gebogenen Klemmfinger abgestützt sind. Dadurch kann erreicht werden, daß beim Einführen dieses Einsatzes oder Federeinsatzes in die Innen- oder Aufnahmeöffnung der Halterung die außenseitigen Vorsprünge eine entsprechende Verschwenkung und Verbiegung der von dem Haltering getragenen Klemm- und Kontaktfinger radial nach innen bewirken, wobei die freien Enden dieser Klemmfinger auch am weitesten nach innen verschwenkt werden, unabhängig von irgendeiner Konusfläche oder einer axialen Ausdehnung einer bestimmten Bewegung. Es genügt, den mit den Vorsprüngen versehenen Bereich in die Aufnahmeöffnung der Halterung einzubringen, um die vorgegebene Verschwenkung der Klemmfinger mit einem von vorneherein festliegenden Maß - abhängig von der Größe der Vorsprünge und ihrer Lage relativ zu den Enden der Klemmfinger - zu erreichen. Somit ergibt sich eine sehr einfache Montage und dennoch eine gewünschte vorgegebene Annäherung der freien Kontaktenden der Klemm- oder Kontaktfinger an die Abschirmung bzw. die Kontaktstelle, so daß es schon vorher möglich ist, die radiale Abmessung der Vorsprünge einerseits und deren Abstand von den Enden der Kontaktfinger andererseits auf die Querschnittsabmessung des jeweiligen länglichen Körpers und die gewünschte Andruckkraft abzustimmen.

Zweckmäßig ist es dabei, wenn die Klemmfinger unterhalb ihrer Vorsprünge ununterbrochen oder durchgehend sind. Somit wird die durch den Vorsprung beim Einführen in die Aufnahmeöffnung auf den Klemmfinger ausgeübte Kraft auch praktisch vollständig auf den Klemmfinger übertragen.

Eine gute Kraftübertragung von den Vorsprüngen auf die Klemmfinger ergibt sich, wenn die Vorsprünge an den Klemmfingern massiv sind beziehungsweise mit diesen aus Vollmaterial bestehen, also an der Stelle der Vorsprünge die Klemmfinger um diese in ihrem jeweiligen Querschnitt verdickt sind. Dadurch kann auch noch besser verhindert werden, daß sich die Vorsprünge selbst eventuell beim Einführen des Einsatzes und der Kontaktfinger in die Aufnahmeöffnung verformen. Darüber hinaus wird dadurch die Stabilität der Klemmfinger vergrößert.

Der Abstand der außenseitigen Vorsprünge der Klemmfinger von dem Haltering kann kleiner als der Abstand der Vorsprünge von den freien Enden der Klemmfinger sein. Entsprechend weit werden die freien Enden radial einwärts verformt, wenn die Vorsprünge in die Aufnahmeöffnung gelangen.

Beispielsweise kann der Abstand der Vorsprünge von den freien Enden der Klemmfinger etwa 3/4 bis 4/5 der Gesamtlänge der von dem Haltering ausgehenden Klemmfinger betragen. Eine weitere zweckmäßige Bemessung kann darin bestehen, daß der radiale Überstand der Vorsprünge gegenüber der Außenseite der Klemmfinger der radialen Dicke oder Stärke dieser Klemm- oder Kontaktfinger oder mehr beträgt. Durch die Kombination solcher Abmessungen kann die radiale Einwärtsbewegung der freien Enden der Klemmfinger in einem gewünschten Maß vorbestimmt werden, so daß auch der Kontaktdruck dadurch beeinflußt wird, wenn ein länglicher Körper zwischen diesen Klemm- oder Kontaktfingern verläuft. Gleichzeitig kann die zur Verschwenkung oder Verbiegung erforderliche Kraft durch diese Abmessungen beeinflußt und auf eine erträgliche Größe begrenzt werden.

Für eine möglichst einfache und leichtgängige Montage des Einsatzes in eine Aufnahmeöffnung der Halterung ist es zweckmäßig, wenn der Übergang von der Außenseite der Klemmfinger zu dem Vorsprung beziehungsweise zumindest die dem freien Ende des jeweiligen Klemmfingers zugewandte Flanke des jeweiligen Vorsprunges in dem Sinne abgeschrägt ist, daß die axiale Ausdehnung des Vorsprunges von dem Klemmfinger in radialer Richtung nach außen abnimmt. Die Vorsprünge können also eine zu ihrer größten radialen Ausdehnung ansteigende Schrägfläche aufweisen, die das Einführen des Einsatzes in die Aufnahmeöffnung erleichtern, wobei diese Einführbewegung zu der radialen Verschwenkung der Klemmfinger nach innen dient.

Die zur größten radialen Ausdehnung des Vorsprunges ansteigende Schrägfläche kann dabei im Querschnitt geradlinig und/oder konvex oder konkav gekrümmt sein. Somit kann ein gewisser Übergang für die Einführbewegung in die Aufnahmeöffnung vorgesehen werden.

Die Klemmfinger können in unverformter Ausgangslage - also außerhalb der Aufnahmeöffnung der Halterung - etwa auf einem Zylinder angeordnet sein und insbesondere an ihrer Innenseite einen der Oberfläche dieses gedachten Zylinders entsprechende Krümmung haben. Dadurch ist gleichzeitig eine gute Anpassung an einen in der Regel zylindrischen länglichen Körper, beispielsweise ein abisoliertes Kabel oder dergleichen mit größtmöglicher Anlagefläche möglich.

Es ist jedoch auch oder zusätzlich möglich, daß sich zumindest die Enden der Klemmfinger wenigstens in unverformter Ausgangslage, einen Einführtrichter bildend, voneinander entfernen. Dies erleichert das Einschieben des länglichen Körpers von dem freien Ende der Klemmfinger her, insbesondere auch schon vor dem Einführen in die eigentliche Halterung und deren Aufnahmeöffnung. Daneben ist natürlich in gleicher Weise das Einführen des länglichen Körpers von dem Haltering her und auch in schon montierter Lage möglich.

Der Haltering kann die Vorsprünge in radialer Richtung überragen. Dies ist vor allem für die Fixierung des Einsatzes mit Hilfe dieses Halteringes vorteilhaft.

Beispielsweise kann der Haltering einen Anschlag und/oder einen Rastvorsprung oder Einschnapp-Bund zum axialen Festlegen am Rand oder im inneren der Aufnahmeöffnung aufweisen. Die erlaubt ein einfaches Einschieben des Klemm- oder Kontakt-Einsatzes und zweckmäßigerweise ein Einclipsen in einer entsprechenden Nut, die den Einschnapp-Bund oder Rastvorsprung aufnehmen kann.

Besonders preiswert kann vor allem der Einsatz hergestellt werden, wenn der aus Klemmfingern und Haltering bestehende Einsatz einstückig ausgebildet ist.

Dabei ist eine weitere Ausgestaltung dahingehend möglich, daß dieser elektrisch leitende Einsatz aus elektrisch leitendem Kunststoff oder aus einem zumindest an der Oberfläche wenigstens bereichsweise mit einer elektrisch leitenden Schicht versehenen Kunststoff beispielsweise aus metallisiertem oder mit Metall beschichteten oder bedampften und/oder mit aus ihm vorstehenden Metalleinlagen versehenen Kunststoff besteht. Dies ermöglicht die Fertigung des Kontakt-Einsatzes im Spritzgießverfahren praktisch in einem Arbeitsgang. Darüber hinaus hat dieser Werkstoff den Vorteil, eine schonende Anlage an der elektrischen Abschirmung eines Kabels oder Schlauches zu bewirken und evtl. Beschädigungen an dieser Abschirmung des bei größerer Anpresskraft und eventuell Relativbewegungen zwischen den Klemmfingern und dem Kabel oder Schlauch weitestgehend auszuschließen.

Nachstehend sind Ausführungsbeispiele der Erfindung anhand der Zeichnung näher beschrieben. Es zeigt in zum Teil schematisierter Darstellung:
- Fig.1: eine Halterung für einen als Kabel ausgebildeten länglichen Körper mit einer bereichsweise durch Abisolierung freigelegten elektrischen Abschirmung, gebildet durch eine Wandung mit einer Aufnahmeöffnung und eine darin eingesetzte Halterung, deren Klemmfinger durch das Einsetzen radial nach innen verformt sind, bevor der längliche Körper eingeschoben ist, im wesentlichen im Schnitt gehalten,
- Fig.2: eine der Fig.1 entsprechende Darstellung nach dem Einschieben des länglichen Körpers in die Halterung und zwischen die dadurch bereichsweise wieder zurückgebogenen Klemmfinger, die dadurch Kontakt mit der elektrischen Abschirmung erhalten,
- Fig.3: eine Stirnansicht und
- Fig.4: eine teilweise im Längsschnitt gehaltene Seitenansicht des die Klemmfinger aufweisenden Einsatzes vor seinem Einführen in die Aufnahmeöffnung der Halterung,
- Fig.5: einen Längsschnitt einer abgewandelten Ausführungsform, bei welcher die Halterung als eine Zugentlastung an dem länglichen Körper bewirkende Kabelverschraubung mit Haltehülse und Überwurfmutter sowie Klemmeinsatz ausgebildet ist, bevor der elektrisch leitende Einsatz in Gebrauchsstellung eingeführt ist, sowie
- Fig.6: eine der Fig.5 entsprechende Darstellung nach dem Einführen des Einsatzes in die entsprechende Aufnahmeöffnung der zu der Halterung gehörenden Hülse der Kabelverschraubung.

Bei der Beschreibung der verschiedenen Ausführungsbeispiele erhalten hinsichtlich ihrer Funktion übereinstimmende oder ähnliche Teile oder auch Lochungen oder dergleichen auch bei unterschiedliche Gestaltung übereinstimmende Bezugszahlen.

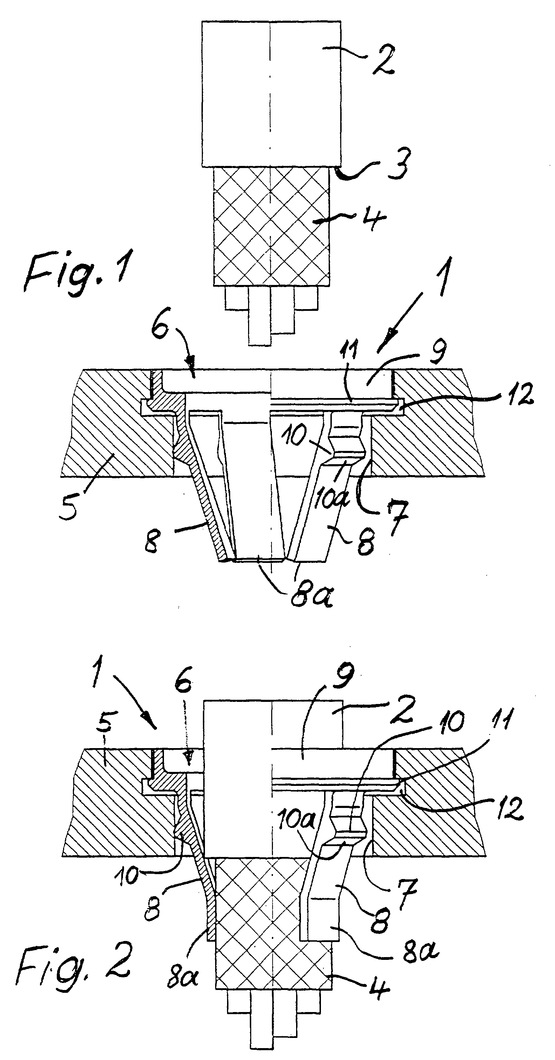

Eine im ganzen mit 1 bezeichnete Halterung für längliche Körper, im Ausführungsbeispiel Kabel 2, die unter einer äußeren Isolierung 3 eine elektrische Abschirmung 4 aufweisen, ist im Ausführungsbeispiel gemäß Fig.1 und 2 praktisch durch eine Wandung 5 und einen noch näher zu beschreibenden, im ganzen mit 6 bezeichneten Einsatz gebildet, der in eine entsprechende Aufnahmeöffnung 7 dieser einen wesentlichen Teil der Halterung 1 bildenden Wandung 5 paßt.

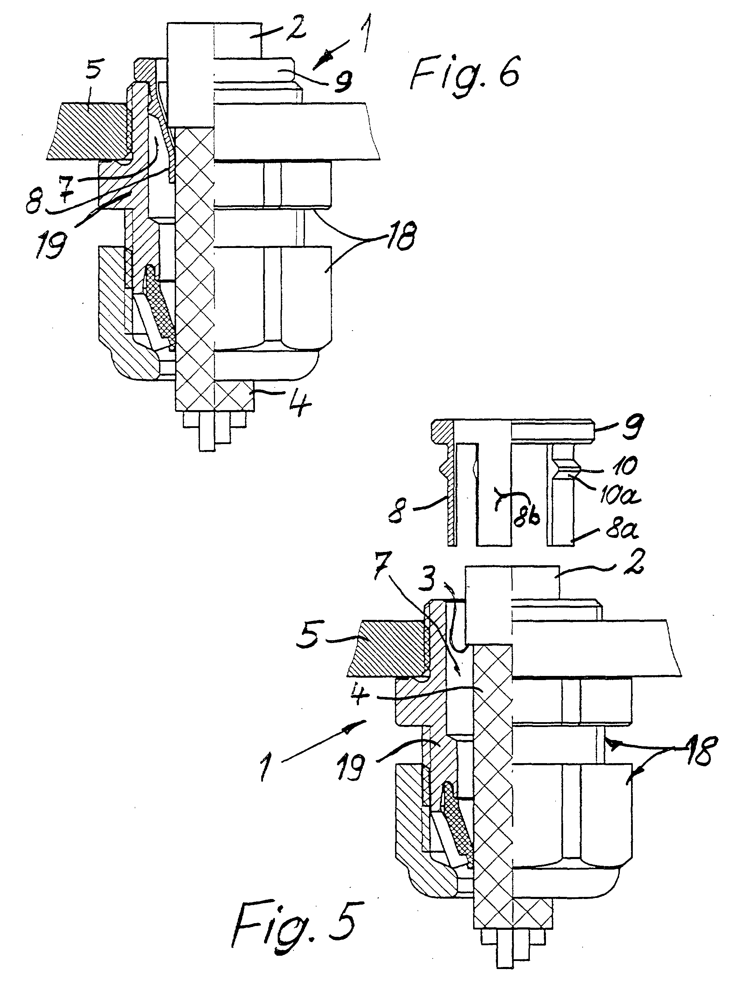

Im Ausführungsbeispiel gemäß den Figuren 5 und 6 ist die Halterung 1 durch eine im ganzen mit 18 bezeichnete Kabelverschraubung gebildet, die mit einer Haltehülse 19 in an sich bekannter Weise in eine entsprechende Durchtrittsöffnung einer Wandung 5 eingeschraubt ist, wobei diese Haltehülse 19 der Kabelverschraubung 18 in diesem Ausführungsbeispiel die Aufnahmeöffnung 7 für den elektrisch leitenden Einsatz 6 aufweist.

Die unterschiedlich ausgebildeten Halterungen 1 für das Kabel 2 oder auch einen sonstigen länglichen Körper, beispielsweise einen Schlauch, haben also jeweils den elektrisch leitenden Einsatz 6 gemeinsam, der Klemmfinger 8 aufweist, die eine elektrisch leitende Verbindung zwischen diesem elektrisch leitenden Einsatz 6 und der elektrischen Abschirmung 4 in Gebrauchsstellung herstellen. Außerdem ist bei diesen unterschiedlichen Ausführungsbeispielen vorgesehen, daß der elektrisch leitende Einsatz 6 jeweils in die unter Umständen etwas verschieden gestaltete Aufnahmeöffnung 7 zum Ein- oder Durchführen des länglichen KÖrpers oder Kabels 2 eingesetzt wird, wobei der Einsatz 6 in allen Ausführungsbeispielen einen Haltering 9 und in axialer Richtung davon abstehende Klemmfinger 8 aufweist, wobei diese Klemmfinger 8 in Gebrauchsstellung alle nach derselben Seite hin von dem Haltering 9 ausgehend abstehen und in nicht montierter entspannter Lage gemäß Fig.4 und 5 parallel zueinander und koaxial zu dem Haltering 9 verlaufen.

Vor allem in Fig.4, aber auch in den Fig.1, 2, 5 und 6 ist dargestellt, daß an der Außenseite von zur Kontaktierung dienenden Klemmfingern 8 mit Abstand von deren als Kontaktstelle dienenden freien Enden 8a und mit Abstand zu dem Haltering 6 jeweils ein Vorsprung 10 angeordnet ist, wobei je nach Anwendung eventuell auch mehrere derartige Vorsprünge 10 vorgesehen sein könnten, sei es nebeneinander, sei es hintereinander.

Bei den in Rede stehenden Ausführungsbeispielen erstreckt sich allerdings jeder Vorsprung 10 jeweils über die gesamte Breite des Klemmfingers 8, so daß mehrere Vorsprünge 10 nebeneinander an einem Klemmfinger 8 nicht möglich sind.

Vor allem anhand der Fig.4 und 5 wird deutlich, daß die Vorsprünge 10 der Klemmfinger 8 in entspannter Lage, also wenn der Einsatz 6 bzw. die Klemmfinger 8 sich außerhalb der Ausnahmeöffnung 7 der Halterung 1 befinden, bis zu einem nicht dargestellten, gedachten Hüllkreis oder Hüllzylinder reichen, dessen Durchmesser größer als die entsprechende Abmessung des Innenquerschnittes der Aufnahmeöffnung 7 der Halterung 1, bzw. größer als der Durchmesser dieser Aufnahmeöffnung 7 ist, was dazu führt, daß beim Einfügen des Einsatzes 6 und vor allem des die Vorsprünge 10 aufweisenden Bereiches der Klemmfinger 8 in die Aufnahmeöffnung 7 die Klemmfinger 8 in der vor allem in Fig.1, aber auch in Fig.6 erkennbaren Weise radial nach innen verschwenkt oder gebogen werden, weil nunmehr die Vorsprünge 1 0 und insbesondere deren größte Abmessung nach diesem Einsetzen in die Aufnahmeöffnung 7 an der Innenwand der Aufnahmeöffnung 7 der Halterung 1 unter der Rückstellkraft der in dieser Gebrauchstellung radial einwärts gebogenen Klemmfinger 8 abgestützt sind. Wird anschließend oder auch schon vorher das Kabel 2 mit dem abisolierten Bereich in diesen Einsatz 6 und zwischen die Klemmfinger 8 eingeführt, werden diese im Bereich ihrer Enden 8a entgegen der Einwärtsbiegung wieder etwas zurückgebogen, liegen also über einen gewissen Bereich außenseitig an der elektrischen Abschirmung 4 an und geben einen entsprechend guten Kontakt, wie es vor allem Fig.2 und 6 zeigen. In vorteilhafter Weise ist dabei diese Verformung der Klemmfinger 8 nach innen und ihr Andrücken an die Abschirmung 4 unabhängig von irgendwelchen Axialverstellungen von Überwurfmuttern oder dergleichen, weil die radiale Verformung der Klemmfinger 8 ausschließlich durch die Aufnahmeöffnung 7 und die Abmessung der Vorsprünge 10 bestimmt wird, so daß also diese radiale Verformung der Klemmfinger 8 für das Andrücken an die elektrische Abschirmung 4 eines Kabels 2 nach dem Montieren oder Einfügen des Einsatzes 6 immer gleich und unabhängig von irgendwelchen Verschraubungsvorgängen bei der Montage ist.

Vor allem in Fig.4 erkennt man, daß die Klemmfinger 8 unterhalb der Vorsprünge 10 ununterbrochen oder durchgehend sind, die Vorsprünge also nicht durch irgendwelche Richtungsänderungen der Klemmfinger selbst gebildet werden. Somit sind die Vorsprünge 10 stabil und widerstandsfähig und können die erwünschte Verformung der Klemmfinger 8 ohne nennenswerte eigene Verformung beim Einführen des Einsatzes 6 in die Aufnahmeöffnung 7 durchführen. Dabei wird dies in allen Ausführungsbeispielen dadurch gefördert, daß die Vorsprünge 10 an den Klemmfingern 8 massiv sind, also aus Vollmaterial bestehen und somit die Klemmfinger 8 an der Stelle der Vorsprünge 10 einen entsprechend verdickten Querschnitt haben. Die Tatsache, daß die Klemmfinger 8 außenseitig radial vorstehende Vorsprünge 10 haben, kann also auch bei dieser Ausführungsform dahingehend formuliert werden, daß die Klemmfinger 8 mit Abstand zu dem Haltering 9 und zu ihrem freien Ende 8a einen in einem kurzen Bereich radial verdickten Querschnitt haben.

Damit die Verbiegung der Klemmfinger 8 in radialer Richtung möglichst groß ist, aber gleichzeitig nicht zu schwer geht, sind mehrere Maßnahmen vorgesehen:

Der Abstand der außenseitigen Vorsprünge 10 der Klemmfinger 8 von dem Haltering 9 ist kleiner als der Abstand der Vorsprünge 10 von den jeweiligen freien Enden 8a der Klemmfinger 8. Dabei beträgt dieser Abstand der Vorsprünge 10 von den freien Enden 8a der Klemmfinger 8 etwa 3/4 bis 4/5 der Gesamtlänge der von dem Haltering 9 ausgehenden Klemmfinger 8.
Der radiale Überstand der Vorsprünge 10 gegenüber der Außenseite des jeweiligen Klemmfingers 8 entspricht etwa der radialen Dicke oder Stärke der Klemmfinger 8 oder beträgt gemäß dem Ausführungsbeispiel etwas mehr als diese Dicke.
Der Übergang von der Außenseite der Klemmfinger 8 zu dem jeweiligen Vorsprung 10 bzw. zumindest die dem freien Ende 8a des jeweiligen Klemmfingers 8 zugewandte Flanke 10a des jeweiligen Vorsprunges 10 ist in dem Sinne abgeschrägt, daß die axiale Ausdehnung des Vorsprunges 10 von dem Klemmfinger 8 in radialer Richtung nach außen abnimmt. Dabei erkennt man deutlich, daß die zur größten radialen Ausdehnung des Vorsprunges 10 ansteigende Schrägfläche oder Flanke 10a im Querschnitt geradlinig verläuft. Sie könnte aber auch zumindest bereichsweise konvex oder konkav gekrümmt sein.

All diese Maßnahmen tragen dazu bei, daß durch das einfache Einführen des Einsatzes 6 und seines Halteringes 9 in die entsprechende Aufnahmeöffnung 7 die Klemmfinger 8 radial einwärts gebogen werden, so daß ihre freien Enden 8a an eine elektrische Abschirmung 4 eines Kabels 2 oder eines sonstigen länglichen Körpers angedrückt werden und einen guten Kontakt dazu herstellen können. Dazu ist natürlich wesentlich, daß der Einsatz 6 und seine Bestandteile sowie auch die Halterung elektrisch leitend sind, um eine entsprechende elektrische Verbindung herzustellen.

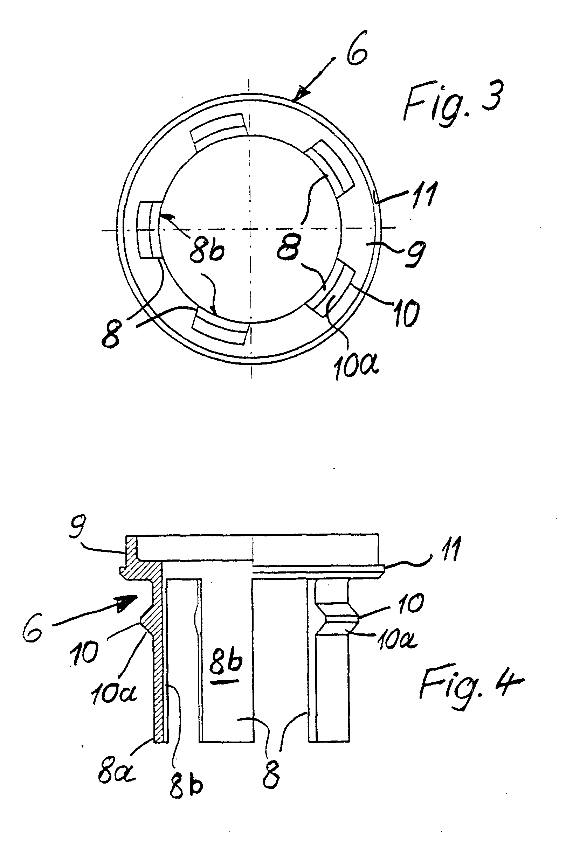

Vor allem in Fig.3 erkennt man, daß die Klemmfinger 8 und insbesondere ihre Innenseiten in unverformter Ausgangslage etwa auf einem - gedachten - Zylinder angeordnet sind und insbesondere an ihrer Innenseite 8b einen der Oberfläche dieses gedachten Zylinders entsprechende Krümmung haben. Entsprechend gut und flächig können sie an einen ebenfalls zylindrischen länglichen Körper wie ein Kabel 2 angedrückt werden.

Aus Fig.3 und 4 sowie aus den weiteren Figuren wird außerdem erkennbar, daß der Haltering 9 die Vorsprünge 10 in radialer Richtung überragt. Dadurch ist es möglich, daß der Haltering 9 gem. dem Ausführungsbeispiel nach Fig.5 und 6 einen Anschlag zum axialen Festlegen am Rand der Aufnahmeöffnung 7 bildet oder einen Rastvorsprung oder Einschnapp-Bund 11 zum axialen Festlegen im inneren der Aufnahmeöffnung 7 und einer dort vorgesehenen Ringnut 12 aufweist. Denkbar wäre aber auch eine Anbringung einer solchen Ringnut 12 in der Haltehülse 19 der Halterung 1 in Form einer Kabelverschraubung 18 gemäß den Fig.5 und 6.

In allen Ausführungsbeispielen ist vorgesehen, daß der aus Klemmfingern 8 und Haltering 9 bestehende Einsatz 6 einstückig ausgebildet ist und bevorzugt aus einem elektrisch leitenden Kunststoff hergestellt ist, wobei es auch möglich ist, daß der Einsatz 6 aus einem zumindest an der Oberfläche wenigstens bereichsweise mit einer elektrisch leitenden Schicht versehenen Kunststoff, beispielsweise aus metallisiertem oder mit Metall beschichteten oder bedampften Kunststoff besteht oder daß in dem den Einsatz 6 bildenden Kunststoff Metalleinlagen vorgesehen sind, wobei all diese Maßnahmen, durch die der Einsatz 6 elektrisch leitend gemacht ist, auch kombiniert sein können.

Eine beliebig gestaltete Halterung 1 für längliche Körper wie Kabel 2, Schläuche oder dergleichen, die eine elektrische Abschirmung 4 aufweisen, enthält in Gebrauchsstellung einen Klemmfinger 8 aufweisenden elektrisch leitenden Einsatz 6, der eine elektrische Verbindung zwischen der Abschirmung 4 und der Halterung 1 herstellt. Die Halterung 1, unter Umständen lediglich eine Wandöffnung oder dergleichen, eventuell aber auch eine komplette Kabelverschraubung mit Zugentlastung für den länglichen Körper - hat eine Aufnahmeöffnung 7 zum Ein- und Durchführen des länglichen Körpers oder Kabels 2 und vor allem auch zur Aufnahme des elektrisch leitenden Einsatzes 6, der seinerseits einen Haltering 9 und von diesem in axialer Richtung abstehende Klemmfinger 8 hat. An der Außenseite der zur Kontaktierung dienenden, elektrisch leitenden Klemmfinger 8 ist mit Abstand zu deren als Kontaktstelle dienenden freien Ende 8a und mit Abstand zu dem Haltering 9 jeweils ein radial nach außen überstehender Vorsprung 10 angeordnet, durch welchen die Klemmfinger 8 beim Einführen in eine entsprechend enge Aufnahmeöffnung 7 um einen der Abmessung dieser Vorsprünge 10 und der Aufnahmeöffnung 8 entsprechenden Betrag einwärts gebogen oder geschwenkt werden und so eine sichere Kontaktierung an dem länglichen Körper bewirken.

## Patentansprüche

1. Halterung (1) für längliche Körper wie Kabel (2), Schläuche oder dergleichen, die eine elektrische Abschirmung (4) aufweisen und in Gebrauchsstellung mittels eines Klemmfinger (8) aufweisenden, elektrisch leitenden Teil der Halterung in Form eines Einsatzes (6) in elektrischer Verbindung mit der Halterung (1) sind, wobei die Halterung (1) eine Aufnahmeöffnung (7) zum Ein- oder Durchführen des länglichen Körpers und zur Aufnahme des elektrisch leitenden Einsatzes (6) und dieser Einsatz (6) einen Haltering (9) mit in etwa axialer Richtung davon abstehenden Klemmfingern (8) aufweist, **dadurch gekennzeichnet,** daß an der Außenseite von zur Kontaktierung dienenden Klemmfingern (8) mit Abstand von deren als Kontaktstelle dienenden freien Enden (8a) und mit Abstand zu dem Haltering (9) jeweils wenigstens ein Vorsprung (10) angeordnet ist, daß die Vorsprünge (10) der Klemmfinger (8) in entspannter Lage bis zu einem Hüllkreis oder Hüllzylinder reichen, dessen Durchmesser größer als die entsprechende Abmessung des Innenquerschnittes der Aufnahmeöffnung (7) der Halterung (1) ist, und daß die Vorsprünge bei in die Aufnahmeöffnung (7) eingesetztem Einsatz an der Wand der Aufnahmeöffnung (7) der Halterung (1) unter der Rückstellkraft der in dieser Gebrauchsstellung radial einwärts gebogenen Klemmfinger (8) abgestützt sind.

2. Halterung nach Anspruch 1, dadurch gekennzeichnet, daß die Klemmfinger (8) unterhalb der Vorsprünge (10) ununterbrochen oder durchgehend sind.

3. Halterung nach Anspruch 1 oder 2, dadurch gekennzeichnet, daß die Vorsprünge (10) an den Klemmfingern (8) massiv sind bzw. aus Vollmaterial bestehen, also an der Stelle der Vorsprünge (10) die Klemmfinger (8) um diese Vorsprünge in ihrem jeweiligen Querschnitt verdickt sind.

4. Halterung nach einem der Ansprüche 1 bis 3, dadurch gekennzeichnet, daß sich der Vorsprung (10) jeweils über die gesamte Breite des Klemmfingers (8) erstreckt.

5. Halterung nach einem der Ansprüche 1 bis 4, dadurch gekennzeichnet, daß der Abstand der außenseitigen Vorsprünge (10) der Klemmfinger (8) von dem Haltering (9) kleiner als der Abstand der Vorsprünge (10) von den freien Enden (8a) der Klemmfinger (8) ist.

6. Halterung nach einem der Ansprüche 1 bis 5, dadurch gekennzeichnet, daß der Abstand der Vorsprünge (10) von den freien Enden (8a) der Klemmfinger (8) etwa dreiviertel bis vierfünftel der Gesamtlänge der von dem Haltering (9) ausgehenden Klemmfinger (8) beträgt.

7. Halterung nach einem der Ansprüche 1 bis 6 dadurch gekennzeichnet, daß der radiale Überstand der Vorsprünge (10) gegenüber der Außenseite der radialen Dicke oder Stärke der Klemmfinger (8) entspricht.

8. Halterung nach einem der Ansprüche 1 bis 7, dadurch gekennzeichnet, daß der Übergang von der Außenseite der Klemmfinger (8) zu dem Vorsprung (10) beziehungsweise zumindest die dem freien Ende (8a) des jeweiligen Klemmfingers (8) zugewandte Flanke (10a) des jeweiligen Vorsprunges (10) in dem Sinne abgeschrägt ist, daß die axiale Ausdehnung des Vorsprunges (10) von dem Klemmfinger (8) in radialer Richtung nach außen abnimmt.

9. Halterung nach Anspruch 8, dadurch gekennzeichnet, daß die zur größten radialen Ausdehnung des Vorsprunges (10) ansteigende Schrägfläche im Querschnitt geradlinig und/oder konvex oder konkav gekrümmt ist.

10. Halterung nach einem der Ansprüche 1 bis 9, dadurch gekennzeichnet, daß die Klemmfinger (8) in unverformter Ausgangslage etwa auf einem Zylinder angeordnet sind und insbesondere an ihrer Innenseite (8b) einen der Oberfläche dieses gedachten Zylinders entsprechende Krümmung haben.

11. Halterung nach einem der Ansprüche 1 bis 10, dadurch gekennzeichnet, daß sich zumindest die Enden der Klemmfinger wenigstens in unverformter Ausgangslage, einen Einführtrichter bildend, voneinander entfernen.

12. Halterung nach einem der Ansprüche 1 bis 11, dadurch gekennzeichnet, daß der Haltering (9) die Vorsprünge (10) in radialer Richtung überragt.

13. Halterung nach einem der Ansprüche 1 bis 12, dadurch gekennzeichnet, daß der Haltering (9) einen Anschlag und/oder einen Rastvorsprung oder Einschnapp-Bund (11) zum axialen Festlegen am Rand oder im Inneren der Aufnahmeöffnung (7) aufweist.

14. Halterung nach einem der vorstehenden Ansprüche, dadurch gekennzeichnet, daß der aus Klemmfingern (8) und Haltering (9) bestehende Einsatz (6) einstückig ausgebildet ist.

15. Halterung nach einem der vorstehenden Ansprüche, dadurch gekennzeichnet, daß der elektrisch leitende Einsatz (6) aus elektrisch leitendem Kunststoff oder aus einem zumindest an der Oberfläche wenigstens bereichsweise mit einer elektrisch leitenden Schicht versehenen Kunststoff, beispielsweise aus metallisiertem oder mit Metall beschichtetem oder bedampftem und/oder mit aus ihm vorstehenden Metalleinlagen versehenen Kunststoff besteht.

## Claims

1. Holder (1) for elongate members such as cables (2), tubes or the like, which have electrical shielding (4) and are electrically connected to the holder (1) in the position of use by means of an electrically conductive part of the holder in the form of an insert (6) having a clamping finger (8), the holder (1) comprising a receiving opening (7) for the insertion or passage of the elongate member and for receiving the electrically conductive insert (6), and this insert (6) has a retaining ring (9) having clamping fingers (8) projecting therefrom substantially in the axial direction, **characterised in that** on the outside of each clamping finger (8) used for contacting, at a spacing from the free ends (8a) thereof which serve as a point of contact and at a spacing from the retaining ring (9), there is provided at least one projection (10), in that in the relaxed position the projections (10) of the clamping fingers (8) extend as far as an enveloping circle or cylinder the diameter of which is greater than the corresponding dimension of the internal cross section of the receiving opening (7) of the holder (1), and in that, when the insert is engaged in the receiving opening (7), the projections are supported on the wall of the receiving opening (7) of the holder (1) under the restoring force of the clamping fingers (8) which are bent radially inwards in this position of use.

2. Holder according to claim 1, characterised in that the clamping fingers (8) are uninterrupted or continuous beneath the projections (10).

3. Holder according to claim 1 or 2, characterised in that the projections (10) on the clamping fingers (8) are solid or consist of solid material, i.e. at the site of the projections (10) the clamping fingers (8) are thickened in their respective cross sections about these projections.

4. Holder according to one of claims 1 to 3, characterised in that the projection (10) extends over the entire width of the clamping finger (8).

5. Holder according to one of claims 1 to 4, characterised in that the spacing of the outside projections (10) on the clamping fingers (8) from the retaining ring (9) is less than the spacing of the projections (10) from the free ends (8a) of the clamping fingers (8).

6. Holder according to one of claims 1 to 5, characterised in that the spacing of the projections (10) from the free ends (8a) of the clamping fingers (8) is approximately three-quarters to four-fifths of the total length of the clamping fingers (8) starting from the retaining ring (9).

7. Holder according to one of claims 1 to 6, characterised in that the radial protrusion of the projections (10) relative to the outside corresponds to the radial thickness of the clamping fingers (8).

8. Holder according to one of claims 1 to 7, characterised in that the transition from the outside of the clamping fingers (8) to the projection (10), or at least the flank (10a) of the particular projection (10) facing the free end (8a) of the particular clamping finger (8), is tapered, so that the axial dimension of the projection (10) from the clamping finger (8) decreases in the radially outward direction.

9. Holder according to claim 8, characterised in that the inclined surface rising towards the maximum radial dimension of the projection (10) is rectilinear and/or curved in a convex or concave manner in cross section.

10. Holder according to one of claims 1 to 9, characterised in that the clamping fingers (8) are disposed substantially on a cylinder, in the undeformed starting position, and have a curvature corresponding to the surface of this imaginary cylinder, particularly on their inside (8b).

11. Holder according to one of claims 1 to 10, characterised in that at least the ends of the clamping fingers diverge from one another, at least in the undeformed starting position, forming an entrance funnel.

12. Holder according to one of claims 1 to 11, characterised in that the retaining ring (9) projects radially over the projections (10).

13. Holder according to one of claims 1 to 12, characterised in that the retaining ring (9) has an abutment and/or an engaging projection or snap-fit flange (11) for axially securing it to the edge or interior of the receiving opening (7).

14. Holder according to one of the preceding claims, characterised in that the insert (6) consisting of clamping fingers (8) and retaining ring (9) is constructed in one piece.

15. Holder according to one of the preceding claims, characterised in that the electrically conductive insert (6) consists of electrically conductive plastic or plastic having an electrically conductive coating provided on at least part of its surface, for example, metallised plastic or metal-coated plastic or plastic vapour-coated with metal and/or plastic comprising metal inlays protruding therefrom.

## Revendications

1. Dispositif d'attache (1) pour corps allongés tels que des câbles (2), tuyaux flexibles ou objets similaires, qui présentent un blindage électrique (4) et qui, en position d'utilisation, sont raccordés électriquement à l'attache (1) au moyen d'une partie de l'attache sous forme d'insert (6) présentant un doigt de serrage (8) et électriquement conducteur, l'attache (1) présentant une ouverture de logement (7) pour l'introduction ou la pénétration du corps allongé et pour le logement de l'insert électriquement conducteur (6) et de cet insert (6) présentant un anneau de blocage (9) avec des doigts de serrage (8) qui dépassent approximativement en direction axiale, **caractérisé en ce qu**'au moins une partie en saillie (10) est respectivement placée sur le côté extérieur des doigts de serrage (8) servant au contact, à distance de leurs extrémités libres (8a) servant de points de contact et à distance de l'anneau de blocage (9), **en ce que** les parties en saillie (10) des doigts de serrage (8) arrivent, en position détendue, jusqu'à un cercle enveloppant ou un cylindre enveloppant dont le diamètre est supérieur à la dimension correspondante de la section intérieure de l'ouverture de logement (7) de l'attache (1), et **en ce que** les parties en saillie, lorsque l'insert est introduit dans l'ouverture de logement (7), sont supportées sur la paroi de l'ouverture de logement (7) de l'attache (1) sous l'effet de la force de rappel des doigts de serrage (8) courbés radialement vers l'intérieur dans cette position d'utilisation.

2. Dispositif d'attache selon la revendication 1, **caractérisé en ce que** les doigts de serrage (8) sont ininterrompus ou continus en-dessous des parties en saillie (10).

3. Dispositif d'attache selon la revendication 1 ou 2, **caractérisé en ce que** les parties en saillie (10) sur les doigts de serrage sont massives ou composées d'un matériau plein, donc qu'à l'endroit des parties en saillie (10) les doigts de serrage (8) sont, dans leur section respective, grossis de ces parties en saillie.

4. Dispositif d'attache selon l'une des revendications 1 à 3, **caractérisé en ce que** la partie en saillie (10) s'étend respectivement sur toute la largeur du doigt de serrage (8).

5. Dispositif d'attache selon l'une des revendications 1 à 4, **caractérisé en ce que** l'écart entre les parties en saillie (10) extérieures des doigts de serrage (8) et l'anneau de blocage (9) est inférieur à l'écart entre les parties en saillie (10) et les extrémités libres (8a) des doigts de serrage (8).

6. Dispositif d'attache selon l'une des revendications 1 à 5, **caractérisé en ce que** l'écart entre les parties en saillie (10) et les extrémités libres (8a) des doigts de serrage (8) est d'environ trois quarts à quatre cinquièmes de la longueur totale des doigts de serrage (8) partant de l'anneau de blocage (9).

7. Dispositif d'attache selon l'une des revendications 1 à 6, **caractérisé en ce que** le dépassement radial des parties en saillie (10) par rapport au côté extérieur correspond à l'épaisseur radiale ou à l'épaisseur des doigts de serrage.

8. Dispositif d'attache selon l'une des revendications 1 à 7, **caractérisé en ce que** le dépassement du côté extérieur des doigts de serrage (8) vers la partie en saillie (10), ou au moins le flanc (10a) de la partie en saillie (10) respective toumé vers l'extrémité libre (8a) du doigt de serrage respectif (8), est incliné dans le sens que la dimension axiale de la partie en saillie (10) diminue du doigt de serrage (8) vers l'extérieur en sens radial.

9. Dispositif d'attache selon la revendication 8, **caractérisé en ce que** la surface inclinée augmentant pour avoir la plus grande dimension radiale de la partie en saillie (10) est de section à ligne droite et/ou courbée de façon convexe ou concave.

10. Dispositif d'attache selon l'une des revendications 1 à 9, **caractérisé en ce que** les doigts de serrage (8), en position initiale indéformée, sont placés approximativement sur un cylindre et qu'ils ont notamment sur leur côté intérieur (8b) une courbure correspondant à la surface de ce cylindre imaginé.

11. Dispositif d'attache selon l'une des revendications 1 à 10, **caractérisé en ce qu**'au moins les extrémités des doigts de serrage s'éloignent les unes des autres, au moins en position initiale indéformée, formant un cône d'introduction.

12. Dispositif d'attache selon l'une des revendications 1 à 11, **caractérisé en ce que** l'anneau de blocage (9) dépasse des parties en saillie (10) en sens radial.

13. Dispositif d'attache selon l'une des revendications 1 à 12, **caractérisé en ce que** l'anneau de blocage (9) présente une butée et/ou une avancée à crans d'arrêt ou un collet à déclic (11) pour la fixation axiale sur le bord ou à l'intérieur de l'ouverture de logement (7).

14. Dispositif d'attache selon l'une des revendications précédentes, **caractérisé en ce que** l'insert (6) constitué des doigts de serrage (8) et de l'anneau de blocage (9) est formé d'une seule pièce.

15. Dispositif d'attache selon l'une des revendications précédentes, **caractérisé en ce que** l'insert (6) électriquement conducteur est constitué de plastique électriquement conducteur ou de plastique dont au moins la surface est munie d'une couche électriquement conductrice au moins en partie, par exemple de plastique métallisé ou revêtu de métal ou métallisé sous vide et/ou muni de couches intermédiaires métalliques dépassant de lui.
